# EUROPEAN PATENT APPLICATION

(11) **EP 4 819 344 A1**
(43) Date of publication of application: **07.10.2026**
(21) Application number: 25898785.8
(22) Date of filing: 26.08.2025
(51) Int. Cl.: H01M 50/342, H01M 50/367, H01M 50/477, H01M 10/613, H01M 10/42, H01M 10/6556

(54) **BATTERY ASSEMBLY AND DEVICE INCLUDING SAME**

(30) Priority: 28.11.2024 KR 20240173787
(71) Applicant: LG Energy Solution, Ltd., Seoul 07335 (KR)
(72) Inventor: JUNG, Seyun, Daejeon 34122 (KR); LEE, Jung Hoon, Daejeon 34122 (KR); KIM, Dooseung, Daejeon 34122 (KR); UM, Taeki, Daejeon 34122 (KR)
(74) Representative: BCKIP Part mbB
(86) International application number: PCT/KR2025/012987
(87) International publication number: WO 2026/116693

(57) **Abstract**

A battery assembly according to an embodiment of the present disclosure comprises a plurality of battery cells; a battery assembly frame that houses the battery cells and covers at least a part of the battery cells; a battery cell cover that covers one side of the battery cells; and a coolant that circulates inside the battery assembly frame, wherein a venting space is provided between the battery cell cover and one surface of the battery assembly frame.

## Description

### TECHNICAL FIELD

### Cross-Reference to Related Application(s)

This application claims priority to and the benefit of Korean Patent Application No. 10-2024-0173787, filed on November 28, 2024, the entire contents of which are incorporated herein by reference.

The present disclosure relates to a battery assembly and a device including the same, and more particularly, to a battery assembly improved in heat management and stability and a device including the same.

### BACKGROUND

As mobile devices have been increasingly developed, and the demand for such mobile devices has increased, the demand for secondary batteries as energy sources is also rapidly increasing. Accordingly, much research on secondary batteries satisfying various needs has been carried out.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series/parallel to configure a battery pack, it is common to configure a battery module composed of at least one battery cell first and then configure a battery pack by using at least one battery module and adding other components.

Since battery cells constituting such a medium or large-sized battery assembly are composed of secondary batteries which can be charged and discharged, such a high-output large-capacity secondary battery generates a large amount of heat in a charge and discharge process. In this case, heat generated from the large number of battery cells is added up in a narrow space, so that the temperature can rise more quickly and excessively. In other words, a battery module in which a large number of battery cells are stacked, and a battery pack equipped with such battery modules can obtain high output, but it is not easy to remove heat generated from the battery cells during charging and discharging. When the heat dissipation of the battery cells is not properly performed, deterioration of the battery cells is accelerated, the lifespan is shortened, and the possibility of explosion or ignition increases.

Moreover, in the case of a battery assembly included in a vehicle battery pack, it is frequently exposed to direct sunlight and may be placed under high-temperature conditions such as summer or desert areas. Further, since a plurality of battery assemblies are concentratedly disposed to increase the mileage of the vehicle, the flame or heat generated in one battery assembly can easily propagate to an adjacent battery assembly, which may eventually lead to ignition or explosion of the battery pack itself.

Therefore, there is a need to develop a technology that effectively cools and fixes each battery cell within a battery assembly, thereby further improving the stability and reliability of the battery.

### [DETAILED DESCRIPTION OF THE INVENTION]

### [Technical Problem]

It is an object of the present disclosure to provide a battery assembly that can safely discharge high-temperature gases during a thermal runaway situation generated in the battery assembly, and can maintain a stable state without degrading cooling performance. Specifically, it is an object of the present disclosure to provide a battery assembly that effectively discharges gases generated during thermal runaway through the intended path, thereby relieving internal pressure, and can maintain stable heat management without leakage of a coolant, and a device including the same.

However, the technical objects to be solved by embodiments of the present disclosure are not limited to the above-mentioned objects, and can be variously expanded within the scope of the technical idea included in the present disclosure.

### [Technical Solution]

According to an aspect of the present disclosure, provided is a battery assembly comprising: a plurality of battery cells; a battery assembly frame that houses the battery cells and covers at least a part of the battery cells; a battery cell cover that covers one side of the battery cells; and a coolant that circulates inside the battery assembly frame, wherein a venting space is provided between the battery cell cover and one surface of the battery assembly frame.

In an embodiment, the battery cell cover may have a material that is ruptured under a certain pressure or higher.

In an embodiment, the battery cell cover may comprise a discharge portion that is a portion ruptured under a certain pressure or higher.

In an embodiment, venting gas generated from the battery cell may rupture the battery cell cover, and may be discharged into the venting space.

In an embodiment, while the battery cell cover is being melted by venting gas generated from the battery cell, the venting gas may be discharged into the venting space.

In an embodiment, the discharge portions may be formed in a plurality.

In an embodiment, bonding portions coated with an adhesive may be provided between the battery cell cover and one surface of the battery assembly frame.

In an embodiment, a space between the bonding portions may be the venting space.

In an embodiment, at least one cell spacer may be located at least at one place between the plurality of battery cells.

In an embodiment, bonding portions coated with an adhesive may be provided between the battery cell cover and one surface of the battery assembly frame, and the bonding portion may be located to correspond to the upper part of the cell spacer.

In an embodiment, the battery cells may be stacked along one direction, and one of the bonding portions may correspond to one of the cell spacers based on a direction perpendicular to the direction in which the battery cells are stacked.

In an embodiment, the cell spacer may comprise a plurality of flow path holes that are perforated along a direction of a longer side of the width of battery cells.

In an embodiment, the coolant can move through the plurality of flow path holes.

In an embodiment, the battery cell cover may comprise a discharge portion that is a portion ruptured under a certain pressure or higher.

In an embodiment, the discharge portion may comprise a first curve and a second curve, and the first curve and the second curve may comprise a plurality of rupture holes.

In an embodiment, the first curve and the second curve may be symmetrical to each other.

In an embodiment, the first curve and the second curve may meet each other at two points.

In an embodiment, the battery cell cover may comprise a discharge portion that is a portion ruptured under a certain pressure or higher, and the discharge portion may be formed with notches, a boundary portion having a difference in thickness, or a plurality of holes.

In an embodiment, the coolant may come into contact with at least a part of the battery cells and may flow inside the battery assembly frame.

According to another aspect of the present disclosure, provided is a device comprising the battery assembly.

### [Advantageous Effects]

According to embodiments of the present disclosure, during a thermal runaway situation generated in the battery assembly, high-temperature gases can be safely discharged to the outside through the discharge portion provided in the battery cell cover. As a result, it is possible to quickly relieve pressure inside the battery assembly and reduce the risk of explosion, and the coolant is maintained stably without leakage, so that thermal management performance may not be degraded.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a battery assembly according to an embodiment of the present disclosure.
FIG. 2 is a plan view showing the battery assembly of FIG. 1.
FIG. 3 is a plan view showing a state of the battery assembly of FIG. 1 viewed from an angle different from that of FIG. 2.
FIG. 4 is a plan view showing a state of the battery assembly of FIG. 1 viewed from an angle different from that of FIGS. 2 and 3.
FIG. 5 is a cross-sectional view showing a cross section taken along the cutting line A-A' of FIG. 2.
FIG. 6 is a cross-sectional view showing a battery assembly according to another embodiment of the present disclosure.
FIG. 7 is a cross-sectional view showing a battery assembly according to yet another embodiment of the present disclosure.
FIG. 8 is a plan view showing a discharge port according to an embodiment of the present disclosure.
FIG. 9 is a plan view showing a discharge portion according to another embodiment of the present disclosure.
FIG. 10 is diagrams showing discharge portions according to various embodiments of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the claimed invention. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

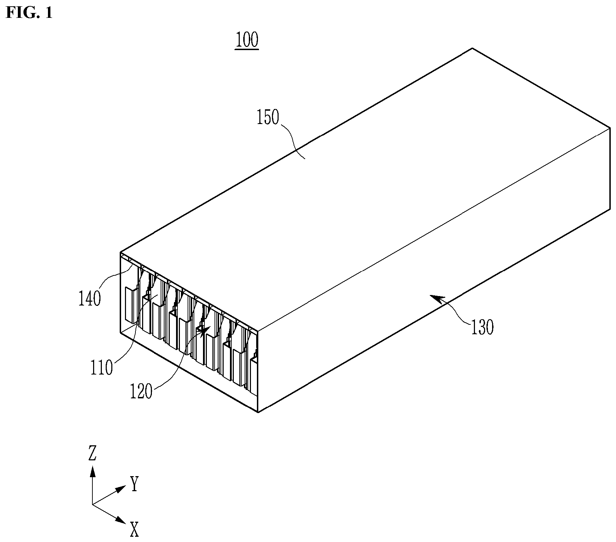

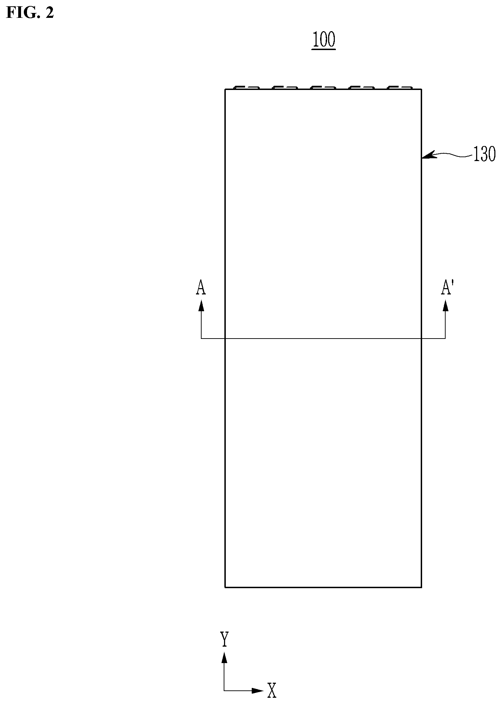

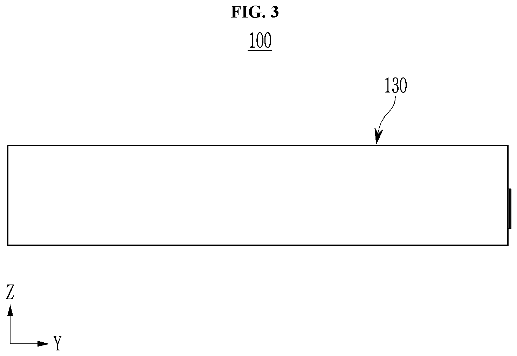

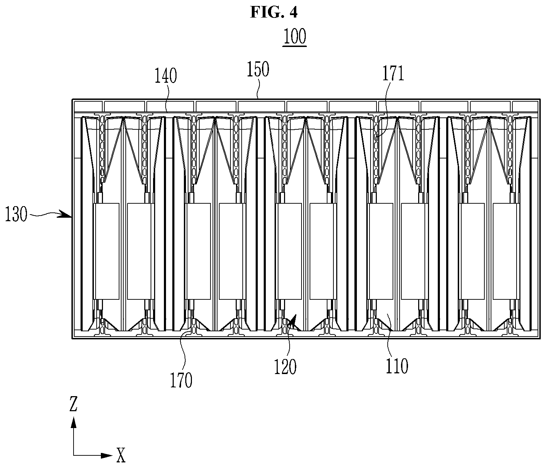

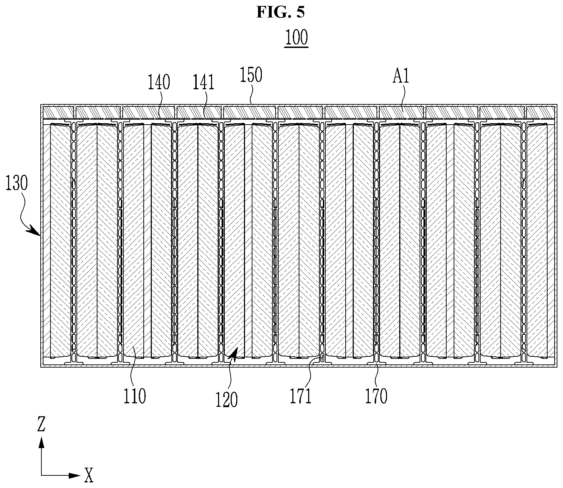

FIG. 1 is a perspective view showing a battery assembly 100 according to an embodiment of the present disclosure. FIG. 2 is a plan view showing the battery assembly 100 of FIG. 1. FIG. 3 is a plan view showing a state of the battery assembly 100 of FIG. 1 viewed from an angle different from that of FIG. 2. FIG. 4 is a plan view showing a state of the battery assembly 100 of FIG. 1 viewed from an angle different from that of FIGS. 2 and 3. FIG. 5 is a cross-sectional view showing a cross section taken along the cutting line A-A' of FIG. 2.

Referring to FIGS. 1 to 5, a battery assembly 100 according to an embodiment of the present disclosure includes a plurality of battery cells 110; a battery assembly frame 130 that houses the battery cells and covers one side of the battery cells; a battery cell cover 140 that covers one surface of the battery cell stack; and a coolant that circulates inside the battery assembly frame 130. A venting space A1 is provided between the battery cell cover 140 and one surface of the battery assembly frame 130.

The battery cells 110 according to the present embodiment may be various types of battery cells, for example, a pouch type battery cell, a prismatic battery cell, or a cylindrical battery cell. As an example, as shown in FIG. 2, the battery cell 110 according to the present embodiment may be a pouch type battery cell 110. The following describes a pouch type battery cell 110, but the battery cell 110 according to the present embodiment is not limited thereto, and various types of battery cells may be applied.

The battery cells 110 in the battery assembly 100 may be provided in a plurality. As an example, a plurality of battery cells 110 may be stacked along one direction so as to be electrically connected to each other, thereby forming a battery cell stack 120. As an example, a plurality of battery cells 110 may be stacked along a direction parallel to the X-axis of FIG. 4 while standing upright.

The battery cell stack 120 according to the present embodiment may be fixed and stably maintained inside the battery assembly frame 130. The battery cell stack 120 is stably fixed to the battery assembly frame 130, thereby capable of minimizing positional fluctuations of the battery cells 110. Thereby, it is possible to protect the battery cells 110 from an external impact or vibration, thereby preventing performance degradation of the battery assembly 100 and extending the lifespan of the battery cells 110. In addition, the fixing structure of the battery cell stack 120 may be simplified, thereby reducing manufacturing costs, and facilitating maintenance operation for the battery assembly 100.

The battery assembly frame 130 according to the present embodiment can perform the role of preventing deformation of the battery cell stack 120 and protecting the battery cells 110 from an external impact or vibration. The battery assembly frame 130 may comprise a metal or polymer material which is light in weight and high in durability.

The battery cell cover 140 according to the present embodiment is a component that covers one surface of the battery cell stack 120, and may include a structure for effectively discharging heat and gas generated in the battery cells 110 to the outside. In particular, the battery cell cover 140 may be disposed on an upper part of the battery cell stack 120.

The battery assembly frame 130 according to the present embodiment can be realized in various forms. It is sufficient if the battery assembly frame can cover at least a part of the battery cells 110, and the shape of the battery assembly frame 130 are not particularly limited.

In an embodiment, the battery assembly frame 130 may be in the form of a so-called "mono frame". In this case, the battery assembly frame 130 can simultaneously perform the role of housing the battery cells 110 in a single integrated structure and protecting them from the outside. The mono frame configuration has the advantage of being manufactured in a single frame structure, reducing the number of components and simplifying the manufacturing process.

In yet another embodiment, the battery assembly frame 130 may be configured to include a main frame and a battery assembly cover 150. In this case, the main frame may support the battery cells 110 and surround the outer periphery, and the battery assembly cover 150 may cover and protect one side of the battery cells. This configuration may facilitate maintenance of the battery cells 110 and replacement of individual components, and thus provide design flexibility tailored to specific applications. One of the components of the battery assembly frame 130 may be a battery assembly cover 150. The bonding method between the main frame and the battery assembly cover 150 is not particularly limited, and various methods, such as welding or mechanical fastening, may be applied.

A venting space A1 may be provided between one surface of the battery assembly frame 130 and the battery cell cover 140. In an embodiment, one surface of the battery assembly frame 130 may correspond to the battery assembly cover 150. High-temperature gases generated in a thermal runaway situation may be safely discharged to the outside through the venting space A1. Thereby, it is possible to effectively alleviate the increase in internal pressure of the battery assembly 100. That is, the venting space A1 allows venting gases generated in the battery cell 110 to be discharged through a controlled path, and thus may perform the role of reducing the risk of explosion and maintaining the safety of the battery system.

The battery assembly cover 150 according to the present embodiment may be disposed outside the battery cell cover 140, and may be structured to couple to the main frame of the battery assembly frame 130. The battery assembly cover 150, together with the main frame of the battery assembly frame 130 and the battery cell cover 140, can play a role of protecting the battery cell stack 120 from the outside.

According to the present embodiment, the coolant may be flowed into the battery assembly frame 130, and then discharged to the outside of the battery assembly 100. In this case, the coolant may be a fluid. As an example, the coolant may be an insulating oil or a cooling water. However, since the coolant comes into direct contact with the battery cell stack 120, other electrical components, and the like within the battery assembly 100, it is necessary to be electrically insulated. Therefore, the coolant may be a material having an insulating property, such as insulating oil. Specifically, a coolant is circulated in the inside of the battery assembly frame 130, thereby effectively managing the heat of the battery cell stack 120. The coolant may circulate in direct contact with the battery cell stack 120, thereby efficiently discharging heat from the battery cells 110.

The battery cell cover 140 may include a discharge portion 141 for safely discharging venting gas generated in a thermal runaway situation. If a thermal runaway occurs, venting gas may be generated inside the battery cell 110, and the discharge portion 141 is ruptured or opened when the pressure reaches a certain level or higher, thereby releasing the venting gas to the outside. The venting gas may then move into the venting space A1 through the ruptured or opened portion of the discharge portion 141 and then may be discharged to the outside of the battery assembly 100. That is, in situations such as thermal runaway, venting gas can be quickly discharged through the discharge portion 141 of the battery cell cover 140, thereby effectively relieving pressure inside the battery assembly 100. In particular, the discharge portion 141 discharges venting gas in such a manner that it is ruptured when the internal pressure exceeds a certain level during thermal runaway, allowing the venting gas to be discharged while preventing the coolant from being discharged. Therefore, even when gas is discharged due to thermal runaway, the coolant does not leak, and can circulate stably inside the battery assembly 100. As a result, the battery cell stack 120 can maintain a stable state because the cooling performance of the battery assembly 100 does not decrease even in a thermal runaway situation.

The battery assembly 100 according to the present embodiment employs an immersion cooling method, in which a coolant directly cools the battery cells 110. Further, a directional venting concept is applied for discharging the venting gases that are discharged from the battery cells 110 in an intended direction.

Since both concepts are applied together, there may be a problem that gases or particles generated in the battery cells 110 meet with the cooling material to accelerate a thermal event or thermal runaway, or that the cooling material impedes discharge of the gases or particles. To prevent such problems, the directional venting path, which discharges gases generated in the battery cells 110, is preferably provided in a position that minimizes the impact on the immersion cooling method. For this purpose, the battery assembly 100 according to the present embodiment may be provided with a battery cell cover 140. By the battery cell cover 140, a venting space A1 through which gases or particles generated in the battery cells 110 are discharged and a space in which a coolant flows in contact with the battery cells 110 to cool the battery cells 110 may be partitioned and separated. Therefore, the impact and interference between the directional venting path through which gas generated in the battery cells 110 is discharged and the cooling material flowing in contact with the battery cells 110 can be minimized. As a result, it is possible to prevent the problem where gases or particles meet with cooling materials to accelerate a thermal event or thermal runaway, or the problem where cooling materials hinder discharge of gases or particles.

The shape and material of the battery cell cover 140 are not particularly limited as long as it can distinguish the venting space A1 from the space through which the coolant flows. As an example, the battery cell cover 140 may be a plate-shaped member having a predetermined thickness. In FIG. 4 or 5, the battery cell cover 140 which is a plate-shaped member configured to cover the upper part of the battery cells 110 is shown as one example. Further, the battery cell cover 140 according to the present embodiment may be a member that is integrated with the battery assembly frame 130. Further, the battery cell cover 140 according to another embodiment is a separate member from the battery assembly frame 130, and may be configured to be coupled or fixed to the battery assembly frame 130.

A gas discharge path, i.e., a venting space A1, through which venting gas can be safely discharged to the outside, may be provided together with one surface of the battery assembly frame 130 and the battery cell cover 140. As described above, one surface of the battery assembly frame 130 may correspond to the battery assembly cover 150, and venting gas discharged through the discharge portion 141 during a thermal runaway situation can be discharged to the outside through the space between the battery assembly cover 150 and the battery cell cover 140. The battery assembly cover 150 may be designed to withstand the high pressure generated during gas discharge, and can be manufactured from a high-strength, heat-resistant material. Further, it can have a buffer structure to alleviate the impact generated when gas is discharged, thereby maintaining stability within the battery assembly 100.

In this way, the battery cell cover 140 and the battery assembly frame 130 may cooperate with each other to provide a function that safely discharges the venting gas generated inside the battery cell stack 120 during a thermal runaway situation to the outside, thereby greatly improving the safety of the battery system.

Referring again to FIGS. 1 to 5, the battery cell cover 140 may be made from a material that is ruptured under a certain pressure or higher. That is, the battery cell cover 140 can be easily ruptured by the venting gas discharged from the battery cells 110, and the venting gas can move into the venting space A1.

The battery cell cover 140 according to the present embodiment is designed to safely discharge gases in response to a thermal runaway or overpressure situation occurring inside the battery cell 110, thereby functioning as an important element in maintaining battery stability even in high-temperature and high-pressure environments. Specifically, the battery cell cover 140 may include a highly heat-resistant material, such as a polyimide film, and such a material may have properties that may be ruptured under a specific pressure, for example, within a range of 0.5 MPa to 1.5 MPa. The battery cell cover 140 is ruptured when the pressure in the battery assembly 100 exceeds a specific limit, thereby rapidly relieving the internal pressure of the battery system. Thus, high-temperature gases generated in the battery cells 110 are safely discharged to the outside, thereby reducing the risk of explosion and maintaining the stability of the entire battery assembly 100. In yet another embodiment, the battery cell cover 140 may utilize a polymer material that reacts sensitively to pressure, and such a material may be selectively ruptured when the pressure in the battery assembly 100 exceeds a certain level. For example, a polymer film or thin metal film with controlled rupture characteristics may be used, and such materials are structurally very thin and precisely designed, so that they can have properties that are easily broken according to pressure conditions. In this case, the battery cell cover 140, together with the battery assembly frame 130, forms a path for releasing gas when the internal pressure of the battery cell 110 suddenly increases, thereby guiding the high-temperature gas to be rapidly discharged to the outside. Thereby, the coolant inside the battery assembly 100 can be stably maintained without being discharged, and the temperature and pressure inside the battery assembly 100 can be effectively regulated even in a thermal runaway situation. That is, the battery cell cover 140 is designed to discharge only gas in a high-temperature and high-pressure environment, and to retain the coolant inside the battery assembly 100, thereby enabling stable heat management while maintaining the efficiency of the cooling system.

Referring again to FIGS. 1 to 5, the battery cell cover 140 may include a discharge portion 141 which is a portion ruptured under a certain pressure or higher.

The discharge portion 141 according to the present embodiment may be ruptured when the pressure reaches a certain value during thermal runaway. This rupture process may relieve excessive pressure within the battery assembly 100, thereby preventing explosion and maintaining safety within the battery assembly 100. The discharge portion 141 may be disposed on the upper part of the battery cell cover 140, and may be designed to discharge gas into a region between the battery cell 110 and one surface of the battery assembly frame 130. This structure can provide a gas discharge path that allows high-temperature gas to be discharged to the outside without damaging other components within the battery assembly 100.

That is, the discharge portion 141 is ruptured under a certain pressure or higher, so that the high-temperature gas inside the battery assembly 100 can be quickly discharged to the outside in an emergency situation, such as thermal runaway. Thereby, it is possible to prevent excessive pressure rise within the battery assembly 100 and reduce the risk of explosion, thereby improving the safety of the battery system.

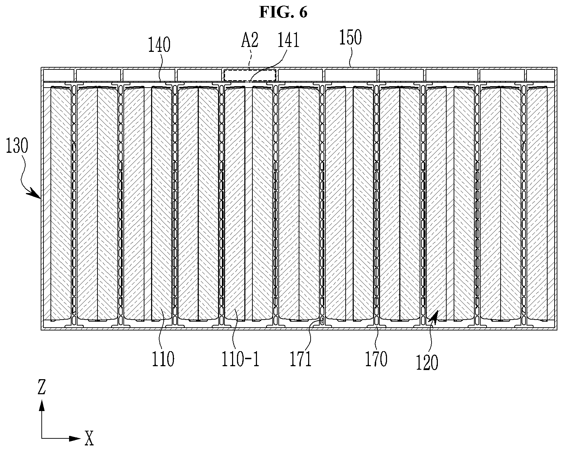

FIG. 6 is a cross-sectional view showing a battery assembly according to another embodiment of the present disclosure.

Referring to FIGS. 1 to 4, and 6, venting gas generated from the battery cells 110 can rupture the battery cell cover 140 and be discharged into the venting space A2. If thermal runaway or excessive heat generation occurs inside the battery assembly 100 according to the present embodiment, venting gas may be generated from the battery cells 110. This venting gas can rapidly increase the pressure inside the battery assembly 100, and cause the battery cell cover 140 to rupture. Specifically, the battery cell cover 140 may be ruptured when the pressure inside the battery assembly 100 rises to a certain level or higher, providing a path for safely discharging venting gas. If the battery cell cover 140 is ruptured, the venting gas may be discharged to the outside through the venting space A2. For example, if the battery cell 110-1 of FIG. 6 generates heat and generates venting gas, the venting gas passes through the battery cell cover 140 and may be discharged into the venting space A2. Thereby, excessive pressure inside the battery assembly 100 can be quickly relieved.

One surface of the battery assembly frame 130 may form a path through which venting gas may be discharged to the venting space A2. This discharge path guides venting gas generated during rupture of the battery cell cover 140 to be safely discharged to the outside, and can control the process by which venting gas flows to the outside. That is, as the venting gas is discharged into the venting space A2 between one surface of the battery assembly frame 130 and the battery cell cover 140, the pressure inside the battery assembly 100 may be rapidly reduced, thereby greatly reducing the risk of explosion within the battery assembly 100. As a result, the battery assembly frame 130, together with the battery cell cover 140, may perform the role of maintaining the structural stability of the battery assembly 100, and also may provide a structure that can stably discharge gas even during thermal runaway.

Referring again to FIGS. 1 to 4 and 6, while the battery cell cover 140 is being melted due to the venting gas generated from the battery cell 110, the venting gas may be discharged into the venting space A2.

According to the present embodiment, high-temperature venting gas may be generated due to a thermal runaway situation occurring inside the battery cell 110. The venting gas is generated as the internal temperature of the cell rapidly increases, which may increase the pressure of the battery assembly 100. This high-temperature venting gas may heat the battery cell cover 140 and gradually melt it. The battery cell cover 140 may be made from a material that melts at a specific temperature or higher, thereby forming a path through which the high-temperature gas generated in the battery cell 110 can be discharged to the outside while melting a part of the battery cell cover 140.

Through the gas discharge path formed in this way, the venting gas can move to the venting space A2. The venting space A2 can provide a space in which the venting gas can be safely dispersed. The venting space A2 may have sufficient space to effectively discharge high-temperature gas generated in the battery cell 110 to the outside. The venting space A2 may be formed by a double structure consisting of the space between the battery assembly cover 150 and the battery cell cover 140. As a result, it is possible to prevent internal pressure from increasing, and safely discharge the gas to the outside, thereby reducing the risk of explosion. In addition, the coolant can be maintained stably without leakage during the venting process of the venting gas, thereby providing continuous cooling performance within the battery assembly 100. Due to the maintenance of this cooling performance, the overall safety and lifespan of the battery system can be extended.

Referring again to FIGS. 1 to 5, the discharge portions 141 may be formed in a plurality. The plurality of discharge portions 141 may be distributed and disposed at various positions on the battery cell cover 140. Thereby, the venting gas may be discharged through multiple paths. Specifically, a plurality of discharge portions 141 are formed on the battery cell cover 140, whereby venting gas generated during thermal runaway can be simultaneously discharged from multiple positions on the battery cell cover 140, rather than being discharged only at a specific point. The discharge portions 141 may be disposed on the upper part or side surface of the battery cell cover 140, or at a position in close contact with the battery cell stack 120, and each discharge portion 141 may be designed to be ruptured independently when high pressure is generated. Thereby, the gas discharge path does not rely on a single passage but instead discharges through multiple passages, so that the pressure inside the battery assembly 100 can be quickly relieved.

The plurality of discharge portions 141 may be evenly distributed along the entire surface area of the battery cell cover 140. As the discharge portions 141 are more dispersed, the venting gas can be discharged more efficiently. The size and position of the discharge portions 141 may be optimized according to the design conditions of the battery assembly 100, and the number and arrangement method of the discharge portions 141 can be determined so that the venting gas can be safely discharged to the outside.

That is, a structure provided with a plurality of discharge portions 141 can increase the pressure relieving efficiency compared to a structure provided with only a single discharge portion 141, thereby preventing excessive pressure rise within the battery assembly 100. Thereby, it is possible to reduce the risk of explosion of the battery cell 110 and improve the safety of the battery assembly 100. In addition, since the venting gas is discharged quickly and evenly through the plurality of discharge portions 141, the temperature and pressure inside the battery assembly 100 can be stably maintained, and the overall performance and reliability of the battery assembly 100 can be improved.

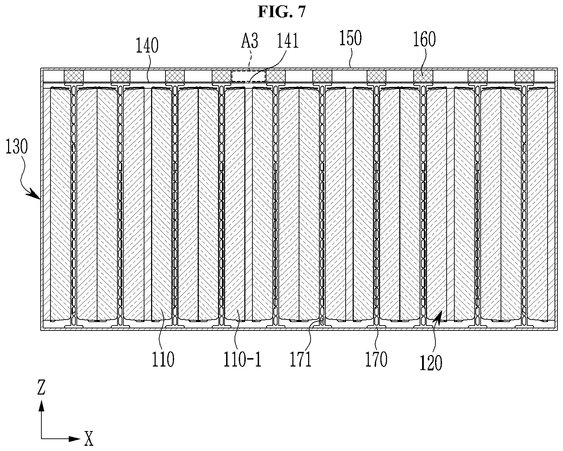

FIG. 7 is a cross-sectional view showing a battery assembly according to yet another embodiment of the present disclosure.

Referring to FIGS. 1 to 4, and 7, bonding portions 160 coated with an adhesive may be provided between the battery cell cover 140 and one surface of the battery assembly frame 130. As an example, the bonding portions 160 may be provided by coating an adhesive between the battery cell cover 140 and the battery assembly cover 150 of the battery assembly frame 130.

The adhesive portions 160 according to the present embodiment can serve to firmly bond the battery cell cover 140 and the battery assembly frame 130. Further, they can perform a function to control the flow of venting gas when it is discharged. Specifically, when the battery cell cover 140 and the battery assembly frame 130 are assembled together, the adhesive can seal the venting space A1 between the battery cell cover 140 and the battery assembly frame 130. The adhesive can prevent the gas from leaking through the gap between the battery cell cover 140 and the battery assembly frame 130 while the venting gas is discharged to the outside, which can help the gas to be discharged through a consistent path.

The bonding portions 160 can be uniformly disposed at a constant interval between the battery cell cover 140 and the battery assembly frame 130. Thus, when venting gas is discharged through the discharge portion 141 of the battery cell cover 140, the gas does not spread into the gap between the battery assembly frame 130 and the battery cell cover 140, but may be discharged to the outside through a clear discharge path. Further, the bonding portions 160 maintain the structural stability of the battery cell cover 140 and the battery assembly cover 150, and preventing separation between the battery cell cover 140 and the battery assembly cover 150 even during thermal runaway.

The bonding portions 160 can be composed of a highly heat-resistant adhesive, and can be designed to ensure the battery assembly 100 to maintain its structure stably without physical deformation even during thermal runaway. For example, the adhesive may be composed of a silicone-based, high-temperature resistant material, and designed to withstand the high heat and pressure generated inside the battery assembly 100.

Referring again to FIGS. 1 to 4, and 7, the space between the bonding portions 160 may be a venting space A3.

The adhesive coated between the battery cell cover 140 and the battery assembly frame 130 of the battery assembly 100 according to the present embodiment can form a plurality of bonding portions 160, and a venting space A3 may be formed between these bonding portions 160. The venting space A3 may function as a path through which the venting gas is discharged, and can allow the gas to be safely discharged to the outside along a specific flow. That is, the adhesive forms a compartment between the battery cell cover 140 and the battery assembly frame 130, allowing the gas to move through a limited path, and the venting space A3 between the bonding portions 160 can be used as a gas discharge path. That is, each of the spaces surrounded by the battery cell cover 140, one surface of the battery assembly frame 130, and adjacent bonding portions 160 may correspond to a venting space A3.

Specifically, if a thermal runaway occurs in the battery assembly 100 and venting gas is generated in the battery cell 110-1 of FIG. 7, the venting gas may be discharged into the space between one surface of the battery assembly frame 130 and the battery cell cover 140 through the discharge portion 141 of the battery cell cover 140. At this time, the bonding portions 160 partially block the gap between the battery cell cover 140 and the battery assembly frame 130, but the space A3 formed between the bonding portions 160 can be used as a flow path through which the venting gas can be discharged to the outside. The bonding portions 160 can perform the function of allowing venting gas to move safely along a specific path while maintaining the structural stability of the battery assembly 100.

The venting space A3 between the bonding portions 160 according to the present embodiment can form a sufficiently large flow path to allow gas to flow, and the venting space A3 may play an important role in discharging venting gas generated in the discharge portion 141 of the battery cell cover 140 to the outside. Further, the venting space A3 between the bonding portions 160 may guide the venting gas to move along the intended path, allowing the venting gas to move outside the battery assembly 100 via a clear discharge path without spreading to adjacent spaces.

The venting space A3 provided between the bonding portions 160 is used as a path for venting gas through which the venting gas moves, whereby the gas generated inside the battery assembly 100 can be safely discharged in a controlled manner. As a result, venting gas generated in a thermal runaway situation may be rapidly discharged through the discharge portion 141 of the battery cell cover 140, and also move stably along the venting space A3 between the bonding portions 160 and being discharged to the outside. This structure helps relieve pressure within the battery assembly 100 and prevents venting gas from leaking through unnecessary paths, and maximizing safety. That is, the bonding portion 160 controls the flow of venting gas while maintaining the airtightness of the battery assembly 100, thereby enabling the stable performance of the battery assembly 100 to be maintained even in a situation such as thermal runaway.

In addition, the bonding portion 160 may minimize the propagation of thermal runaway generated in one battery cell 110 to other adjacent battery cells 110. Venting gas flowing into the venting space A3 between adjacent bonding portions 160 only flows along the venting space A3, and cannot move to other venting space A3 beyond the bonding portions 160. For example, in FIG. 7, if one of the battery cells 110-1 exhibits a thermal runaway and generates venting gas, the discharge portion 141 of the battery cell cover 140 located on an upper part of the battery cell 110-1 is ruptured, causing the venting gas to move to the venting space A3 on the upper part of the battery cell 110-1. At this time, since the venting space A3 is separated by the bonding portions 160, the venting gas cannot move to other venting space A3. If the venting gas moves to other venting space A3, the venting gas may penetrate through the battery cell cover 140 due to the difference in pressure and flow back into a place where an adjacent battery cell 110 is located. Because the venting gas is in a high temperature state, it may cause a thermal runaway in the adjacent battery cell 110, which may lead to heat propagation where the thermal runaway phenomenon propagates, and ultimately may result in an explosion or fire. The bonding portion 160 according to the present embodiment can perform the function of preventing a thermal runaway phenomenon occurring in one battery cell 110-1 from spreading to other battery cells 110. That is, the bonding portion 160 can serve to ensure that the venting spaces A3 provided between the bonding portions 160 do not communicate with each other, but maintain an independent venting path. As a result, it is possible to minimize the propagation of thermal runaway occurring in one battery cell 110 to adjacent battery cells 110.

Referring again to FIGS. 1 to 4 and 7, at least one cell spacer 170 may be located at least at one place between the plurality of battery cells 110.

The cell spacer 170 according to the present embodiment can maintain a physical gap between the battery cells 110 and help ensure that the coolant circulate smoothly. The cell spacer 170 can serve to prevent the battery cells 110 from being in close contact with each other and causing overheating or deformation, and also may perform the function of improving the efficiency of heat dissipation between the battery cells 110.

Specifically, a cell spacer 170 is inserted between the plurality of battery cells 110, thereby maintaining an appropriate spacing between the battery cells 110 and also improving the structural stability of the battery assembly 100. The cell spacer 170 may be made from a thermally stable material, and may perform the role of effectively dissipating heat generated in the battery cells 110. For example, the cell spacer 170 may be made from a metal or a polymer material with high thermal conductivity, which may help to quickly remove heat generated as the coolant passes between the battery cells 110. That is, the gaps between the battery cells 110 may be maintained by the cell spacers 170, and the cell spacer 170 provides sufficient space for the coolant to circulate between the cells, thereby maximizing the cooling effect. As a result, the heat management of the entire battery assembly 100 can be achieved more effectively.

The cell spacer 170 may have a surface that comes into contact with one side surface of the battery cells 110 located at the center of the battery cell stack 120. Specifically, one surface of the cell spacer 170 may come into contact with one side surface of the battery cell 110 facing the other side surface of the cell spacer 170, and the other surface of the cell spacer 170 may come into contact with one side surface of the battery cell 110 facing the other surface of the cell spacer 170.

The cell spacer 170 can be bonded and fixed to adjacent battery cells 110. For example, although not shown in this drawing, a bonding member may be interposed between at least a part of one surface of the battery cell 110 and at least a part of one surface of the cell spacer 170, and a bonding member may be interposed between at least a part of one surface of another adjacent battery cell 110 and at least a part of the other surface of the cell spacer 170. That is, the battery cell 110 and the cell spacer 170 can be bonded and fixed to at least at a part of the surface. For example, the bonding member may be an insulating tape. Of course, a configuration in which the battery cell 110 and the cell spacer 170 come into contact with each other without a bonding member also corresponds to an embodiment of the present disclosure.

The size of the cell spacer 170 may be larger than the size of the battery cell 110. That is, the height of the cell spacer 170 (in the Z-axis direction of FIG. 5) may be larger than the height of the battery cell 110. In this case, the battery cell 110 may be attached onto the cell spacer 170, and may be located as if it floats inside the frame 130 of the battery assembly 100 without making contact with the frame 130 of the battery assembly 130. Specifically, the upper edge and lower edge of the battery cell 110 may be located at a constant height from one end and the other end of the cell spacer 170. More specifically, when the height of the cell spacer 170 (Z-axis direction in FIG. 5) is higher than the height of the battery cell 110 (Z-axis direction in FIG. 5), the battery cell 110 may be bonded and fixed while being located at the center of the cell spacer 170.

Referring again to FIGS. 1 to 4, and 7, bonding portions 160 coated with an adhesive may be provided between the battery cell cover 140 and one surface of the battery assembly frame 130. At this time, the bonding portions 160 may be located to correspond with the upper part of the cell spacer 170.

According to the present embodiment, a bonding portion 160 may be provided between the battery assembly frame 130 and the battery cell cover 140, and the bonding portion 160 may be disposed between the battery assembly frame 130 and the battery cell cover 140 with the adhesive coated thereon. The bonding portion 160 may absorb vibrations or impacts that may occur inside the battery assembly 100 and help firmly fix the battery cells 110. In particular, the bonding portion 160 may be positioned so as to correspond to the upper part of the cell spacer 170, so that the battery cells 110 may be precisely located and the spacing between the battery cells 110 may be uniformly maintained, thereby stabilizing the arrangement and alignment of the battery cells 110.

The bonding portion 160 according to the present embodiment may include a heat-resistant adhesive capable of maintaining bonding performance even under high temperatures and high pressures. This may also have properties that allow it to withstand thermal damage caused by high-temperature gases generated during thermal runaway. For example, a silicone-based adhesive or epoxy adhesive may be used, which can stably fix the battery cell cover 140 without losing adhesive strength even at high temperatures.

As a result, the bonding portion 160 is designed to withstand pressure changes that may occur during the gas discharge process, so that the battery cells 110 may be firmly fixed even during gas discharge. Thereby, it is possible to improve the overall structural stability of the battery assembly 100, thereby increasing the durability of the battery assembly 100. Further, the bonding portion 160 is located to precisely correspond to an upper part of the cell spacer 170, thereby maintaining consistent spacing without the battery cells 110 fluctuating in position. This helps to ensure that the battery cells 110 are uniformly spaced within the battery assembly 100, thereby contributing to improving electrical stability and maximizing battery efficiency. Additionally, the spacing between the battery cells 110 is kept constant, thereby optimizing heat management and cooling performance.

In addition, as described above, the bonding portion 160 according to the present embodiment can perform the role of ensuring that the venting spaces A3 provided between the bonding portions 160 do not communicate with each other but maintain independent venting paths. When the bonding portion 160 is located so as to correspond to the upper part of the cell spacer 170, the battery cells 110 can have independent venting paths that are not affected by each other. The battery cells 110 are partitioned into specific spaces by the cell spacers 170, and therefore, if one of the battery cells 110-1 exhibits a thermal runaway and generates venting gas, the venting gas cannot be supplied to other battery cells 110 beyond the cell spacer 170, and instead immediately moves to the venting space A3 through the ruptured battery cell cover 140. The venting gas that has moved into the venting space A3 only flows along the venting space A3 and cannot move to other venting space A3 beyond the bonding portions 160, as described above.

The cell spacer 170 can perform a primary thermal propagation prevention function, and the bonding portion 160 can perform a secondary thermal propagation prevention function, so that venting gas flowing into the venting space A3 does not move to other venting spaces A3. That is, in the present embodiment, the bonding portion 160 is located so as to correspond to the upper part of the cell spacer 170, so that a certain unit of battery cells 110 can maintain independent vent paths without communicating with each other. As a result, the propagation of the thermal runaway phenomenon occurring in the battery cell 110 to other adjacent battery cells 110 can be minimized.

More specifically, the battery cells 110 are stacked along one direction, and one of the bonding portions 160 may correspond to one of the cell spacers 170 based on a direction perpendicular to the direction in which the battery cells 110 are stacked.

The battery assembly 100 according to the present embodiment may be formed by stacking a plurality of battery cells 110 in one direction. The battery cell stack 120 may be supported by a battery assembly frame 130, and the battery assembly frame 130 may provide structural stability to the battery cells 110.

The cell spacer 170 may be disposed between the battery cells 110. The cell spacer 170 may maintain a constant spacing between the battery cells 110 and can play a role in heat management and mitigating mechanical impact.

A bonding portion 160 may be provided between the battery cell cover 140 and the battery assembly cover 150. The bonding portion 160 may be located to correspond to the upper part of the cell spacer 170 on the basis of the Z-axis of FIG. 7, which is perpendicular to the stacking direction of the battery cells 110. The bonding portion 160 may use a heat-resistant adhesive that provides stable bonding strength even in a high-temperature and high-pressure environment, and thus can help stably fix the battery cells 110. The bonding portion 160 may be located to match with each cell spacer 170, thereby maintaining a consistent spacing and structural consistency in the state that the battery cells 110 are stacked.

The bonding portion 160 is disposed at a position corresponding to the cell spacer 170, so that the overall structural stability of the battery cell stack 120 is enhanced. That is, since the battery cells 110 are stably fixed in a direction perpendicular to the stacking direction, the battery cells 110 can be prevented from moving or changing in position even when the battery assembly 100 is exposed to an external impact or vibration. This can contribute to improving the durability and extending the lifespan of the battery.

Referring again to FIGS. 1 to 5, the cell spacer 170 may include a plurality of flow path holes 171 that are perforated along the direction of the longer side of the battery cell 110.

The cell spacer 170 according to the present embodiment may include a plurality of flow path holes 171 that are perforated along the longitudinal direction. The cell spacer 170 includes a plurality of flow path holes 171 that are perforated along a direction of a longer side of the width of battery cells 110, thereby allowing the battery cell 110 to be evenly cooled. As a result, it is possible to prevent damage due to overheating of specific areas of the battery cell 110.

That is, the cell spacers 170 effectively disperse heat within the battery cell stack 120 and allow the coolant to circulate between the battery cells 110, thereby optimizing heat management of the entire battery assembly 100. Consequently, the temperature of the battery cells 110 is maintained uniformly, and the performance and lifespan of the battery assembly 100 can be improved. Further, the cell spacer 170 is located between the battery cells 110 thereby improving the structural stability of the entire battery assembly 100. This can increase the mechanical strength of the battery assembly 100 and increase the durability of the battery assembly 100 against an external impact or vibration.

Referring again to FIGS. 1 to 5, the coolant may be moved through a plurality of flow path holes 171.

The flow paths 171 according to the present embodiment provide paths through which the coolant can move, allowing the coolant to flow between the battery cells 110. The coolant can flow through the plurality of flow paths 171. In this case, the coolant moves while receiving transfer of heat generated from the battery cells 110, thereby effectively cooling the battery cells 110 located in the center of the battery cell stack 120. A part of the coolant can directly cool the battery cells 110 by coming into direct contact with them, and simultaneously another part of the coolant can indirectly surface-cool the battery cells 110 by moving along the flow paths 171 through the cell spacers 170.

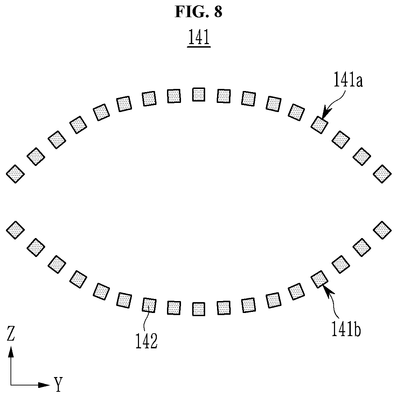

FIG. 8 is a plan view showing a discharge portion according to an embodiment of the present disclosure.

Referring to FIGS. 1 to 5 and 8, the discharge portion 141 includes a first curve 141a and a second curve 141b, wherein the first curve 141a and the second curve 141b may include a plurality of rupture holes 142.

The first curve 141a and the second curve 141b according to the present embodiment may be arranged along the outer periphery of the battery cell 110. The first curve 141a and the second curve 141b may be disposed parallel to each other while maintaining a constant distance between them. As a result, it is possible to form a passage that effectively disperses and discharges gas generated in the battery cells 110 to the outside.

A plurality of rupture holes 142 may be formed on the first curve 141a and the second curve 141b. The rupture hole 142 may be comprised of small holes designed to be ruptured when a preset pressure or higher is exceeded, and respective rupture holes 142 may be arranged in a curved shape to uniformly relieve pressure during thermal runaway. For example, the rupture hole 142 may include a polymer film or metal material that is selectively ruptured when a specific temperature and pressure are applied.

The first curve 141a and the second curve 141b are disposed in parallel to each other, so that the first curve 141a and the second curve 141b are balanced, providing an effective discharge path through the gas can discharged to the outside. In particular, this curved shape prevents gas from being discharged in one direction at a time and helps ensure that the gas is evenly distributed and discharged along the entire perimeter of the battery cell 110. As a result, it is possible to prevent structural damage that can occur when high-pressure gas is concentrated on one side and discharged, thereby contributing to the improvement of safety.

Further, the first curve 141a and the second curve 141b are disposed along the periphery of the battery cell 110, so that the gas is not concentrated in one direction, but rather evenly distributed and discharged throughout the entire battery cell 110. This structure minimizes structural damage to the battery cell 110 due to gas discharge during thermal runaway, and contributes to significantly improving the durability and stability of the battery system.

Referring again to FIGS. 1 to 5 and 8, the first curve 141a and the second curve 141b may be symmetrical to each other.

According to the present embodiment, the first curve 141a and the second curve 141b may be symmetrically disposed along the outer periphery of the battery cell 110, and rupture holes 142 may be formed at regular intervals in the first curve 141a and the second curve 141b. This symmetrical structure allows the high-temperature venting gas generated during thermal runaway to be evenly distributed along the first curve 141a and the second curve 141b, thereby effectively helping discharge of the gas to the outside. Further, the symmetrical arrangement allows a uniform discharge path to be formed throughout the battery cell 110, which can help prevent heat and pressure from being concentrated on one side.

That is, as the first curve 141a and the second curve 141b are disposed symmetrically, the high-temperature gas generated during thermal runaway can be evenly distributed. Consequently, it is possible to prevent the gas from being discharged in a biased manner to one side, thereby enabling the pressure to be uniformly relieved across the entire region of the battery assembly 100. As a result, it is possible to reduce the risk of explosion and improve the safety of the battery assembly 100.

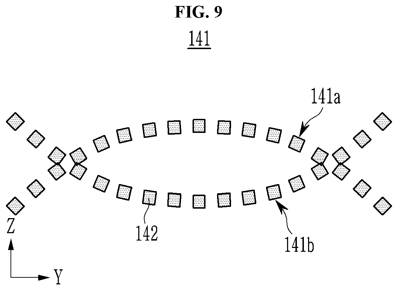

FIG. 9 is a plan view showing a discharge portion according to another embodiment of the present disclosure.

Referring to FIGS. 1 to 5 and 9, the first curve 141a and the second curve 141b may meet each other at two points.

The structure in which the first curve 141a and the second curve 141b of the present embodiment meet each other at two points can form an important discharge path that guides high-temperature and high-pressure gas to be safely discharged outside the battery assembly 100. That is, the structure in which the first curve 141a and the second curve 141b meet each other at two points forms a specific path through which gas can be intensively discharged in an emergency situation such as thermal runaway, thereby rapidly relieving the internal pressure of the battery assembly 100. Further, this intersection point may serve to prevent a phenomenon in which gas becomes excessively concentrated and shifts to one side. This can contribute to reducing the risk of explosion within the battery assembly 100 and ensuring the safety of the battery cell 110.

As a result, this structure provides an additional discharge point where the first curve 141a and the second curve 141b meet at the end of the discharge portion 141 to allow gas to escape, which may prevent a sudden increase in pressure inside the battery assembly 100 during thermal runaway and effectively relieves the pressure.

The plurality of rupture holes 142 arranged on the first curve 141a and the second curve 141b can be automatically ruptured upon reaching a certain pressure, thereby functioning to discharge gas to the outside. The rupture holes 142 can be disposed at regular intervals along the first curve 141a and the second curve 141b so as to allow gas around the battery cell 110 to be discharged and to uniformly distribute the pressure.

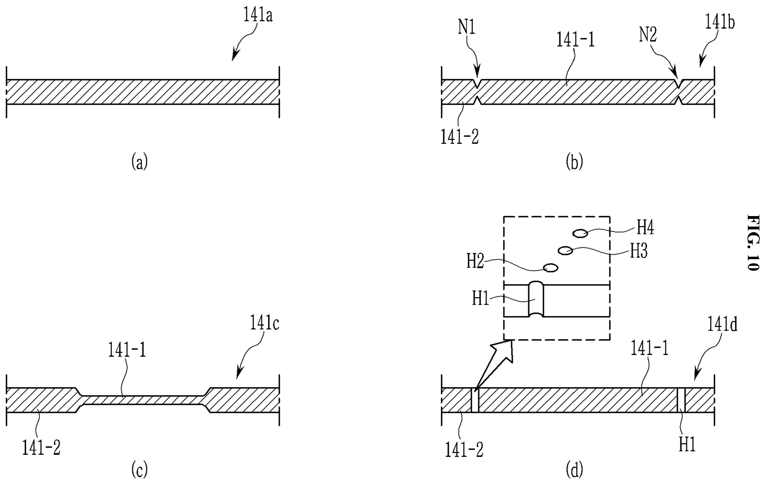

FIG. 10 is diagrams showing discharge portions 141 according to various embodiments of the present disclosure.

Referring to FIGS. 1 to 4 and 10, the battery cell cover 140 may include discharge portions 141, 141a, 141b, 141c, 141d which are portions ruptured under a certain pressure or higher. In various embodiments of the present disclosure, the discharge portions 141, 141a, 141b, 141c, 141d may be formed with notches N1, N2, boundary portions with thickness differences, or a plurality of holes H1, H2, H3, and H4.

Referring to FIGS. 10(a) to 10(d), at least a part of the discharge portions 141a, 141b, 141c, and 141d according to an embodiment of the present disclosure may be ruptured when a pressure equal to or greater than a certain level is applied. At least a part of the discharge portion 141 may be ruptured due to gas or particles emitted from the battery cell 110, and may move to the venting space A2 through the ruptured portion and be discharged.

First, referring to FIG. 10 (a), the discharge portion 141a according to an embodiment of the present disclosure may be a plate-shaped member. The discharge portion 141a may include a material that can be easily ruptured by the venting gas emitted from the battery cell 110 or may have a thickness that is sufficiently thin to be easily ruptured by venting gas emitted from the battery cell 110.

Referring to FIG. 10(b), the discharge portion 141b according to another embodiment of the present disclosure may be formed with notches N1 and N2 in order to form a portion that is ruptured when a pressure equal to or greater than a certain level is applied. The notches N1, N2 refer to portions of the discharge portion 141b that are recessed to a predetermined thickness. The discharge portion 141b may include a first portion 141-1 and a second portion 141-2, wherein the first portion 141-1 and the second portion 141-2 may be separated by the notches N1, N2. The first portion 141-1 is the portion where rupture is induced, and the notches N1, N2 and the first portion 141-1 are ruptured by venting gas emitted from the battery cell 110, through which the gas may move to the venting space A2.

Referring to FIG. 10 (c), the discharge portion 141c according to another embodiment of the present disclosure may be formed with a boundary portion with a difference in thickness in order to form a portion that is ruptured when a pressure equal to or greater than a certain level is applied. The discharge portion 141c may include a first portion 141-1 and a second portion 141-2, and the first portion 141-1 may be a portion having a thinner thickness than the second portion 141-2, and may be the portion where rupture is induced. The boundary between the first portion 141-1 and the second portion 141-2 may correspond to the boundary portion having a thickness difference. The first portion 141-1, which has a weak strength due to its thin thickness, is ruptured by the venting gas emitted from the battery cell 110, and the venting gas can move to the venting space A2 through the ruptured first portion 141-1.

Referring to FIG. 10(d), the discharge portion 141d according to another embodiment of the present disclosure may be formed with a plurality of holes H1, H2, H3, H4 in order to form a portion that is ruptured when a pressure equal to or greater than a certain level is applied. The plurality of holes H1, H2, H3, H4 refer to holes penetrating through the discharge portion 141d. The discharge portion 141d may include a first portion 141-1 and a second portion 141-2, wherein the first portion 141-1 and the second portion 141-2 may be separated by a plurality of holes H1, H2, H3, H4 arranged at predetermined intervals. The plurality of holes H1, H2, H3, H4 arranged at predetermined intervals may form a boundary between the first portion 141-1 and the second portion 141-2. The portions between the holes H1, H2, H3, and H4 and the first portion 141-1 are ruptured by the venting gas emitted from the battery cell 110, through which the venting gas may move into the venting space A2.

The coolant may come into contact with at least a part of the battery cells 110 and flow inside the battery assembly frame 130.

The coolant may circulate inside the battery assembly frame 130 and absorb heat while coming into contact with the battery cells 110. Through this, the battery cells 110 can effectively dissipate the heat generated during operation, while the coolant quickly transfers heat within the battery assembly 100, suppressing the temperature rise of the entire battery system. The coolant may be a highly thermal conductive insulating oil, a water-glycol mixture, or a special coolant, which helps prevent the battery cell 110 from overheating and maintains a stable temperature even during prolonged high-power operation.

The flow of coolant plays an important role in maintaining a uniform temperature within the battery cells 110. Further, the coolant comes into direct contact with the battery cells 110, so that heat exchange is carried out smoothly, which can help minimize the degradation of battery performance at high temperatures. That is, the coolant circulates inside the battery assembly frame 130, so that the temperature distribution throughout the entire battery system can be maintained evenly. Thereby, it is possible to prevent specific battery cells 110 from overheating and maintains a uniform temperature throughout the entire battery system, thereby improving the lifespan and performance of the battery assembly 100. This increases the durability of the battery assembly 100 and ensures the long-term performance stability of the battery assembly 100.

According to another embodiment of the present disclosure, a device comprising at least one battery assembly 100 can be provided.

One or more battery assemblies 100 according to the present embodiment described above may be mounted together with various control and protection systems such as a BMS (battery management system), a BDU (battery disconnect unit), and a cooling system, to form a battery assembly 100.

The battery assemblies 100 may be applied to various devices, which include, for example, transportation vehicles such as electric bicycles, electric vehicles, and hybrids. However, without being limited thereto, the battery assemblies or the battery pack may be applied to various devices capable of using secondary battery assemblies 100.

In the present embodiment, expressions indicating directions such as "front," "rear," "left," "right," "up," and "down" have been used. These expressions are used only to facilitate the description, and may vary, for example, depending on the location of a target object or an observer.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: battery assembly
110: battery cell
120: battery cell stack
130: battery assembly frame
140: battery cell cover
141: discharge portion
141a: first curve
141b: second curve
142: rupture hole
150: battery assembly cover
160: bonding portion
170: cell spacer
171: flow path hole

## Claims

1. A battery assembly comprising:
a plurality of battery cells;
a battery assembly frame that houses the battery cells and covers at least a part of the battery cells;
a battery cell cover that covers one side of the battery cells; and
a coolant that circulates inside the battery assembly frame,
wherein a venting space is provided between the battery cell cover and one surface of the battery assembly frame.

2. The battery assembly according to claim 1,
wherein the battery cell cover has a material that is ruptured under a certain pressure or higher.

3. The battery assembly according to claim 1,
wherein the battery cell cover comprises a discharge portion that is a portion ruptured under a certain pressure or higher.

4. The battery assembly according to claim 1,
wherein venting gas generated from the battery cell ruptures the battery cell cover, and is discharged into the venting space.

5. The battery assembly according to claim 1,
wherein while the battery cell cover is being melted by venting gas generated from the battery cell, the venting gas is discharged into the venting space.

6. The battery assembly according to claim 1,
wherein the discharge portions are formed in a plurality.

7. The battery assembly according to claim 1,
wherein bonding portions coated with an adhesive are provided between the battery cell cover and one surface of the battery assembly frame.

8. The battery assembly according to claim 7,
wherein a space between the bonding portions is the venting space.

9. The battery assembly according to claim 1,
wherein at least one cell spacer is located at least at one place between the plurality of battery cells.

10. The battery assembly according to claim 9,
wherein bonding portions coated with an adhesive are provided between the battery cell cover and one surface of the battery assembly frame, and
the bonding portion is located to correspond to the upper part of the cell spacer.

11. The battery assembly according to claim 10,
wherein the battery cells are stacked along one direction, and
one of the bonding portions corresponds to one of the cell spacers based on a direction perpendicular to the direction in which the battery cells are stacked.

12. The battery assembly according to claim 9,
wherein the cell spacer comprises a plurality of flow path holes that are perforated along a direction of a longer side of the width of battery cells.

13. The battery assembly according to claim 12,
wherein the coolant can move through the plurality of flow path holes.

14. The battery assembly according to claim 1,
wherein the battery cell cover comprises a discharge portion that is a portion ruptured under a certain pressure or higher,
the discharge portion comprises a first curve and a second curve, and
the first curve and the second curve comprise a plurality of rupture holes.

15. The battery assembly according to claim 14,
wherein the first curve and the second curve are symmetrical to each other.

16. The battery assembly according to claim 14,
wherein the first curve and the second curve meet each other at two points.

17. The battery assembly according to claim 1,
wherein the battery cell cover comprises a discharge portion that is a portion ruptured under a certain pressure or higher, and
the discharge portion is formed with notches, a boundary portion having a difference in thickness, or a plurality of holes.

18. The battery assembly according to claim 1,
wherein the coolant comes into contact with at least a part of the battery cells and flows inside the battery assembly frame.

19. A device comprising the battery assembly according to claim 1.
